(19) Europäisches Patentamt

European Patent Office

Office européen des brevets

(11) Publication number: **0 538 491 A1**

(12) **EUROPEAN PATENT APPLICATION**
published in accordance with Art. 158(3) EPC

(21) Application number: **92909941.4**

(22) Date of filing: **09.04.92**

(86) International application number:
**PCT/RU92/00072**

(87) International publication number:
**WO 92/19934 (12.11.92 92/28)**

(51) Int. Cl.⁵: **G01C 15/00**

(30) Priority: **07.05.91 SU 4933803**

(43) Date of publication of application:
**28.04.93 Bulletin 93/17**

(84) Designated Contracting States:
**CH DE GB LI**

(71) Applicant: **APONIN, Grigory Ivanovich**
**ul. Tsentralnaya, 30-114**
**Troitsk, Moskovskay obl., 142092(RU)**
Applicant: **BESSHAPOSHNIKOV, Alexandr Alexandrovich**
**pr. 60-letia Oktyabrya, 25-2-29**
**Moskow, 117036(RU)**
Applicant: **GURASHVILI, Victor Archeliovich**
**ul. Akademika Kapitsy, 26-2-209**
**Moskow, 117647(RU)**
Applicant: **KULAKOV, Dmitry Mikhailovich**
**Mikroraion B, 2-120**
**Troitsk, Moskovskaya obl., 142092(RU)**
Applicant: **MALYSHEV, Alexandr Jurievich**
**ul. Tsentralnaya, 26-40**
**Troitsk, Moskovskaya obl., 142092(RU)**
Applicant: **MIKHAILIN, Jury Sergeevich**
**Slavyansky bulvar, 5-38**

**Moskow, 121352(RU)**

(72) Inventor: **APONIN, Grigory Ivanovich**
**ul. Tsentralnaya, 30-114**
**Troitsk, Moskovskay obl., 142092(RU)**
Inventor: **BESSHAPOSHNIKOV, Alexandr Alexandrovich**
**pr. 60-letia Oktyabrya, 25-2-29**
**Moskow, 117036(RU)**
Inventor: **GURASHVILI, Victor Archeliovich**
**ul. Akademika Kapitsy, 26-2-209**
**Moskow, 117647(RU)**
Inventor: **KULAKOV, Dmitry Mikhailovich**
**Mikroraion B, 2-120**
**Troitsk, Moskovskaya obl., 142092(RU)**
Inventor: **MALYSHEV, Alexandr Jurievich**
**ul. Tsentralnaya, 26-40**
**Troitsk, Moskovskaya obl., 142092(RU)**
Inventor: **MIKHAILIN, Jury Sergeevich**
**Slavyansky bulvar, 5-38**
**Moskow, 121352(RU)**

(74) Representative: **Hackett, Sean James**
**Marks & Clerk 57-60 Lincoln's Inn Fields**
**London WC2A 3LS (GB)**

(54) **DEVICE FOR DETERMINATION OF TRANSVERSE DISPLACEMENT OF OBJECTS.**

(57) A device for determination of a transverse displacement of objects comprises, optically interconnected, a laser source (1) of collimated radiation, a converter (3) of collimated laser radiation designed so as to provide for forming two beams (B, C) of collimated laser radiation with a desired angle θ of their convergence and with a desired frequency shift between them, two beam splitters (4, 6), a laser radiation converter (5) designed so as to provide for forming an orthogonally oriented interference of two pairs (B', C', B'', C'') of converging beams (B, C) of collimated laser radiation which lie in orthogonal planes and are orthogonally polarized in pairs; two radiation analysers (7, 11) oriented so that their

planes of transmission of collimated laser radiation are mutually perpendicular; a reference photodetector (12) and photodetectors (8, 13) electrically connected to a processing unit (10). In a particular case the frequency shift between the beams (B, C) is equal to zero, and the photodetectors (8, 12, 13) are of a scannable type.

FIG.1

Field of Art

The present invention relates to apparatuses for measuring displacements of objects and, more particularly, to apparatuses for determining lateral displacements of objects.

Background of the Invention

Known in the prior art is an apparatus for determining lateral displacements of objects in which successively installed, along the direction of laser radiation, are a laser, a corner mirror, a deflecting plate, an interference prism, and a lens (Kh. K. Yambayev "Special instruments for geodetic engineering work", 1990, Nedra (Moscow), p. 90-94).

In this known apparatus the corner mirror is positioned on the object being measured. Laser radiation passes to the corner mirror and back and arrives through the deflecting plate at the interference prisms where it is reflected from its faces. The obtained interference of laser beams is observed in the lens installed after the deflecting plate. Lateral displacements of the corner mirror change the inclination angle of the observed interference bands. As a result, the accuracy of measuring the lateral displacements is insufficiently high because it is based on the double travel of laser beams and because it is difficult to determine accurately the inclination angle of interference bands when they are visually observed in the localization area of the interference bands.

Also known in the prior art is an apparatus for determining lateral displacements of objects comprising a laser source of collimated radiation and, successively installed along the collimated laser radiation, a laser radiation converter, a radiation analyzer, and a photodetector electrically connected with a processing unit (SU, A, 1432334).

In said apparatus the laser radiation converter has the form of a laser radiation modulator while the radiation analyzer is a polarization analyzer which, on measuring the position of laser radiation arriving at the analyzer relative to the initial position of said radiation changes the direction of the polarizing vector of laser radiation which changes intensity of said radiation at the analyzer output which is connected optically with the photodetector input.

Thus, the photodetector signal appears to be proportional to the turning angle of the polarization vector of laser radiation. This vector is determined by lateral displacements of the analyzer and photodetector rigidly linked therewith from their initial position with respect to laser radiation. As a result, the measuring accuracy of lateral displacements of objects is insufficiently high since the analyzer and photodetector react but roughly on small changes in the vector of laser radiation.

In addition, this apparatus provides for measuring only one component of lateral displacements in the preset direction.

Disclosure of the Invention

The main object of the present invention is to provide an apparatus for determining lateral displacements of objects wherein its optical layout would make it possible to carry out interference measurements thus enhancing considerably the accuracy of measuring lateral displacements of objects and would expand the functional capabilities of this apparatus, ensuring concurrent measurement of two components of lateral displacements of objects in a preset direction.

This is achieved by providing an apparatus for determining lateral displacements of objects comprising a laser source of collimated radiation and, installed successively along the direction of the collimated laser radiation, a main converter of laser radiation, a main radiation analyzer and a main photodector electrically connected with a processing unit wherein, according to the invention, the main converter of laser radiation is made so as to shape two beams of collimated laser radiation at a preset angle of their convergence and a preset frequency shift between these beams, and wherein said two beams of laser radiation pass through a main beam splitter mounted directly after the main converter along the direction of collimated laser radiation, an auxiliary converter of laser radiation made so as to form an orthogonally-disposed interference of two pairs of converging beams of collimated laser radiation, arranged in orthogonal planes and orthogonally pairwise polarized and, installed directly after the main beam splitter along the collimated laser radiation, an auxiliary beam splitter installed directly after the auxiliary converter along the direction of collimated laser radiation before the main radiation analyzer, an auxiliary radiation analizer optically connected with the auxiliary beam splitter and installed so that its transmission plane of the collimated laser radiation is perpendicular to the transmission plane of the main radiation analyzer, and reference and auxiliary photodetectors optically connected with the main beam splitter and auxiliary analyzer, respectively, and electrically connected with the processing unit.

It is practicable that in case the frequency shift between two beams of collimated laser radiation is equal to zero, each photodetector should be of the scanning type.

It is quite reasonable that in case of an other than zero frequency shift between two beams of collimated laser radiation of the main converter, each photodetector should be provided with individual slotted grids mounted immediately before its respective photodetector along collimated laser radiation with a preset space period found from the expression

$$\delta = \lambda/2 \sin (\theta/2),$$

where

$\lambda$ - length of wave of laser radiation;

$\theta$ - angle of convergence of laser radiation beams of each pair.

This arrangement of the claimed apparatus improves the accuracy of measurements during concurrent measurement of two components of lateral displacements of objects by shaping two relatively-orthogonal interference fields in the region of the object to be measured, each of said fields being registered, respectively, by the main photodetector with the main analyzer and the auxiliary photodetector with the auxiliary analyzer which corresponds to concurrent measurement of two components of lateral displacements on the basis of interference measurements which, in effect, are most accurate at present among the known optical measurement methods.

Brief Description of the Drawings

Now the invention will be described by way of its concrete embodiments with reference to the appended drawings in which:

Fig. 1 is a general diagram of the apparatus for determining lateral displacements of objects according to the invention;

Fig. 2 is the optical layout of one of converters of collimated laser radiation of the apparatus according to Fig. 1;

Fig. 3 is the optical diagram of another converter of collimated laser radiation of the apparatus according to Fig 1. (axonometric view);

Fig. 4 is a general diagram of another embodiment of the apparatus according to Fig.1;

Fig. 5 is the optical diagram of another embodiment of the converter according to Fig. 2;

Fig. 6 is a two-dimensional interference of beams produced with the aid of the apparatus according to Fig. 1.

Best Methods for Carrying out the Invention

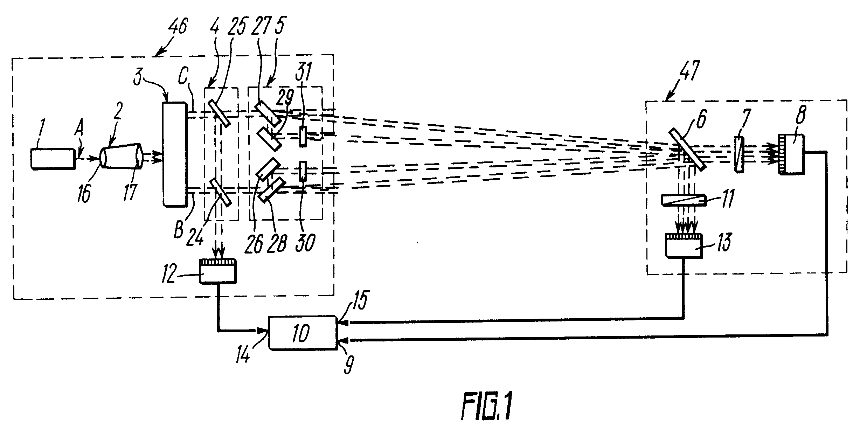

The apparatus for determining lateral displacements of objects according to the invention comprises a laser source 1 (Fig. 1) of collimated radiation and installed successively along direction A of laser radiation, a collimator 2, a laser radiation converter 3, a beam splitter 4, a laser radiation converter 5, a beam splitter 6, a radiation analyzer 7 and a photodetector 8 whose output is electrically connected with the input 9 of a processing unit 10.

The apparatus according to the invention also comprises a radiation analyzer 11 optically connected with the beam splitter 6 and installed so that its transmission plane of collimated laser radiation is perpendicular to the transmission plane of collimated laser radiation of the radiation analyzer 7, and photodetectors 12 and 13 optically connected with the beam splitter 4 and radiation analyzer 11, respectively, and electrically connected, with the inputs 14 and 15 respectively of the processing unit 10. The photodetector 12 is a reference photodetector.

In the described embodiment of the apparatus according to the invention the collimator 2 has lenses 16 and 17 successively installed along direction A of laser radiation.

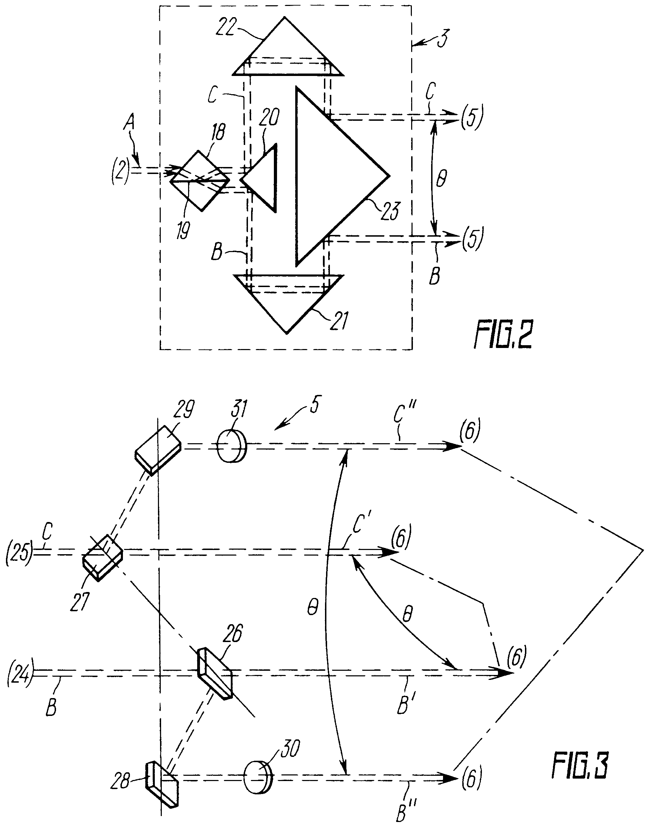

The laser radiation converter 3 (Figs 1 and 2) is made so as to ensure formation of two beams B and C of collimated laser radiation at a preset angle $\theta$ of their convergence and a preset frequency shift between said beams B and C. For this purpose the converter 3 (Fig. 2) comprises successively installed along direction A of laser radiation, a beam-splitting cube 18 with a semitransparent film 19 inside, and a prism 20 with mirror coating of its faces, dividing laser radiation into two laser radiation beams B and C and optically connected, respectively, with prisms 21 and 22 which latter are optically connected with a mirror-coated prism 23 from which two laser radiation beams B and C are emitted.

For these two beams B (Fig. 1) and C the beam splitter 4 has optically-interconnected plates 24 and 25 one of which 24 is installed on the path of the laser radiation beam B and optically connected with the converter 5 while the other one 25, is installed on the path of laser radiation beem C and connected optically with the converter 5.

The laser radiation converter 5 for the two beams B and C (Fig. 1) of laser radiation is made so as to ensure formation of the orthogonally-arranged interference of two pairs of converging beams B and C of collimated laser radiation, arranged in orthogonal planes and orthogonally-polarized in pairs. For this purpose the converter 5 (Fig. 3) comprises two beam-splitter plates 26 and 27 installed on the paths of laser radiation beams B and C and optically connected respectively, with mirrors 28 and 29 and with the beam splitter 6. The mirrors 28 and 29 are optically connected with half-wave plates 30 and 31, respectively, and with the beam splitter 6.

In the described embodiment of the apparatus according to the invention the frequency shift between the two beams B (Fig. 1) and C of collimated laser radiation of the converter 3 is equal to zero, therefore each one of the photodetectors 8, 12 and 13 is made of the scanning type.

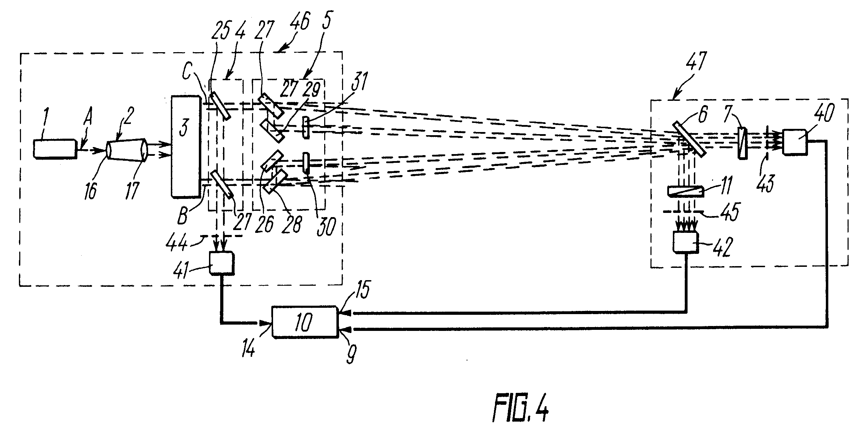

The version of the apparatus according to the invention shown in Fig. 4 is similar to the one shown in Fig. 1.

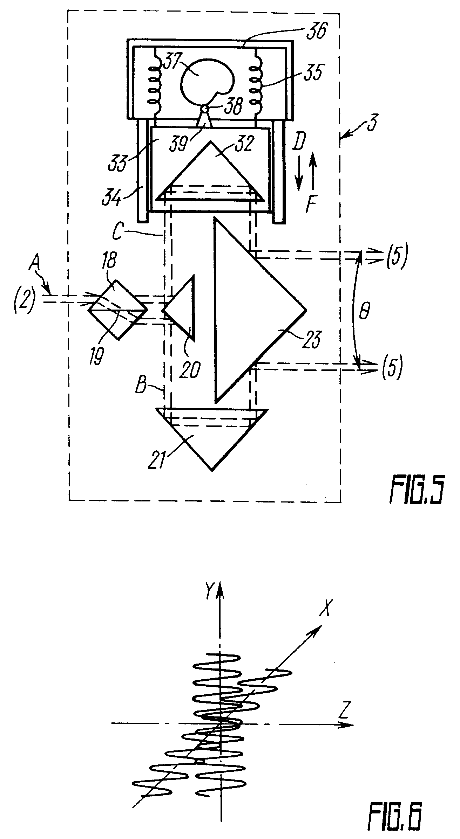

The difference lies in that in this embodiment of the apparatus the frequency shift between two beams B (Fig. 4) and C of collimated laser radiation of the converter 3 is other than zero. For this purpose the prism 32 is installed in the converter 3 (Fig. 5) with a provision for reciprocating along arrows D and E. To this end the prism 32 is mounted on a base 33 moved in guides 34 by springs 35 which are fastened at one end to the base 33 and at the other end, to a holder 36, and by a cam 37 contacting with a ball 38 located on a stop 39 secured on the base 33.

In this case each photodetector 40 (Fig. 4) 41 and 42 has individual slotted grids 43, 44 and 45 installed immediately before its respective photodetector 40, 41 and 42 along the direction A of collimated laser radiation with a preset space period $\delta$ which is found from the expression:

$$\delta = \lambda/2 \sin (\theta/2),$$

where

$\lambda$ - length of laser radiation wave.

The claimed apparatus for determining lateral displacements of objects functions on the following lines.

The laser radiation source 1 (Fig. 1), collimator 2, converters 3 and 5, beam splitter 4 and reference photodetector 12 are installed on a rigidly-secured base 46 while the beam splitter 6, radiation analyzers 7 and 11 and photodetectors 8 and 13 are mounted on the base 47 serving as the object whose lateral displacements are determined by the apparatus according to the invention with relation to the base 46.

Radiation of the laser source 1 passing through lenses 3 and 4 of the collimator 2 enters the converter 3 (Fig. 2) where collimated laser radiation is divided by the beam-splitting cube 18 with semi-transparent film 19 inside into two approximately identical beams B and C which arrive, in their turn, at each one of two mirror bases of the prism 20 from which the reflected beams B and C are directed onto the prisms 21 and 22, respectively. Said beams B and C move from the prisms 21 and 22 onto the mirror faces of the prism 23. From this prism 23 two beams B and C of collimated laser radiation are emitted at a preset angle of their convergence and a preset frequency shift between said beams B and C which is equal to zero in the described embodiment of the invention. The preset parameters of the convergence angle $\theta$ and dis-

tances between the beams B and C at the output of the converter 3 are set during its alignment, taking in account the initial design parameters of its elements.

Part of laser radiation of the converter 3 (Fig. 3) arrives at the beam splitter 4 where most laser beams B and C pass through the plates 24 and 25 and enters the converter 5. Part of radiation of the laser beams B (Figs 1 and 3) and C coming to the converter 5 passes through the beam splitter plates 26 and 27 while its other part reflected from the beam-splitter plates 26 and 27 arrives at the mirrors 28 and 29 wherefrom the beams B and C, passing through the half-wave plates 30 and 31, arrive at the beam splitter 6.

Provided its elements are properly aligned, the converter 5 ensures formation of orthogonally-arranged interference of two pairs B', C' and B'', C'' of converging beams of collimated laser radiation, arranged in orthogonal planes and orthogonally-polarized in pairs as shown in Fig. 3. In the area of measurements where these beams intersect and converge, this ensures the formation of two orthogonally-disposed interference fields with a space periods $\delta = \lambda/2 \sin (\theta/2)$ and their orthogonal polarization.

One part of radiation passes from the beam splitter 6 across the radiation analyzer 7 to the photodetector 8 while its other part passes across the radiation analyzer 11 to the photodetector 13. Inasmuch as two pairs of converging orthogonally disposed and orthogonally-polarized beams arrive at the beam splitter 6, selection of the position of the analyzers 7 and 11 ensures the passage of the appropriately oriented and orthogonally polarized parts of radiation emitted from the beam splitter 6.

Shown in Fig. 6 is two-dimensional interference of laser beams produced in the measurement area by the apparatus according to the invention with relation to coordinates X, Y, Z.

Thus, the photodetectors 8 (Fig. 1) and 13 register, each, one lateral component of displacements of the base 47 shown in Fig. 6 along axes X and Y.

The converter 5 forms the beams B and C with a zero frequency shift from each other, therefore this forms two orthogonally-disposed stationary interferences in the area of measurements. They are registered by scanning photodetectors 8 and 13.

The other part of radiation of the beam splitter 4 directed by the plates 24 and 25 at the reference photodetector 12, said plates 24 and 25 being appropriately aligned and producing the required convergence angle $\theta$ between the beams reflected from then, ensures the same stationary interference on the reference photodetector 12. Thus, the reference photodetector 12 registers the reference signal of interference. The outputs of the reference photodetector 12 and those of the photodetectors 8 and 13 are electrically connected with the processing unit 10 which registers changes in the phase (frequency) difference of the reference photodetector 12 and photodetectors 8 and 13, measured in response to the measured lateral displacements.

The operating principle of the apparatus according to the invention, shown in Fig. 4, is similar to that of the apparatus shown in Fig. 1.

The difference lies in that the converter 3 (Figs 4 and 5) forms two beams B and C of collimated laser radiation with an other-than-zero frequency shift between them.

The prism 32 (Fig. 5) of the converter 3 is reciprocated along arrows D and E by the cam 37. Inasmuch as the prism 21 is immovable and the prism 32 is movable, the known Doppler effect ensures a frequency shift between the outgoing beams of the converter 3. The frequency shift between said beams B and C in the measurement area produces nonstationary (traveling) orthogonally-disposed and orthogonally-polarized interferences. In this case there are slotted grids 43, 44 and 45 arranged before the photodetectors 40 (Fig. 4), 41 an 42, respectively. As a result of nonstationary interference the traveling interference field is scanned through said slotted grids 43, 44 and 45 and registered by the photodetectors 40, 41 and 42 whose outputs are connected, respectively, to the processing unit 10 which registers the change in the phase (frequency) difference of the reference photodetector 41 and photodetectors 42 and 43 respectively, in response to the measured lateral displacements.

The disclosed apparatus ensures higher accuracy of measuring lateral displacements by the use of most accurate interference measurements of lateral displacement by comparing the registered signals to the reference signal.

## Industrial Applicability

The apparatus for determining lateral displacements of objects, according to the invention, can be used for concurrent measurements of two components of lateral displacements of various physical objects including foundations of building and architectural memorials; various engineering structures in geodetic, engineering work for accurate determination of their lateral displacements, for example alignment of large magnetic systems of accelerators; tracts of Earth's surface. The apparatus according to the invention can also be used for determining lateral displacements on changes in the loads imposed on various engineering structures, for example due to bending of large-size parts in mechanical engineering, shipbuilding.

## Claims

1. An apparatus for determining lateral displacements of objects comprising a laser source (1) of collimated radiation and, installed in succession along direction (A) of said collimated laser radiation, a main converter (3) of laser radiation, a main radiation analyzer (7) and a main photodetector (8) electrically connected with a processing unit (10) CHARACTERIZED in that the main laser radiation converter (3) ensures formation of two beams (B,C) of collimated laser radiation at a preset angle ($\theta$) of their convergence and a preset frequency shift between said beams (B, C), and said two beams (B,C) of collimated laser radiation pass through a main beam splitter (4) installed immediately after the main converter (3) along the direction (A) of collimated laser radiation, an auxiliary laser radiation converter (5) capable of forming orthogonally-arranged interference of two pairs (B', C', B'', C'') of converging beams (B,C) of collimated laser radiation, arranged in orthoganal planes and orthogonally-polarized in pairs, and an auxiliary beam splitter (6) installed immediately after the main beam splitter (4) along the direction (A) of collimated laser radiation, an auxiliary radiation analyzer (11) installed immediately after the auxiliary converter (5) in the direction (A) of collimated laser radiation before the main radiation analyzer (7) optically connected with the auxiliary beam splitter (6) and installed so that its transmission plane of collimated laser radiation is perpendicular to the transmission plane of collimated laser radiation of the main radiation analyzer (7), and reference (12) and auxiliary (13) photodetectors optically connected with the main beam splitter (4) and the auxiliary analyzer (11), respectively, and electrically connected with the processing unit (10).

2. An apparatus as claimed in Claim 1 CHARACTERIZED in that, when the frequency shift between the two beams of collimated laser radiation of the main converter (3) is equal to zero, each of the photodetectors (8, 12, 13) is of the scanning type.

3. An apparatus as claimed in Claim 1 CHARACTERIZED in that, when the frequency shift between the two beams of collimated laser radiation of the main converter (3) is other than zero, each photodetector (40, 41, 42) has individual slotted grids (43, 44, 45) installed directly between the respective photodetector (40, 41, 42) in the direction (A) of collimated laser radiation with a preset space period ($\delta$)

which is found from the expression:

$$\delta = \lambda/2 \sin(\theta/2),$$

where
    $\lambda$ - length of laser radiation wave.

FIG.1

EP 0 538 491 A1

FIG.2

FIG.3

FIG.4

10

FIG.5

FIG.6

## INTERNATIONAL SEARCH REPORT

| International application No. |
|---|
| PCT/RU 92/00072 |

**A. CLASSIFICATION OF SUBJECT MATTER**

IPC$^5$ G01C 15/00

According to International Patent Classification (IPC) or to both national classification and IPC

**B. FIELDS SEARCHED**

Minimum documentation searched (classification system followed by classification symbols)

IPC$^5$ G01B 11/30; G01C 5/00, 15/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU, A1, 1610274 (Vsesojuzny institut inzhenerov geodezii, aerofotosjemki i kartografii), 30 November 1990 (30.11.90) | 1 |
| A | GB, A, 1367886 (GROUP SERVICES LIMITED), 25 September 1974 (25.09.74), figure 2 | 1 |
| A | US, A, 3871771 (RICHARD NELSON SCOTT), 18 March 1975 (18.03.75), figure 2 | 1 |
| A | US, A, 4963022 (GARY E.SOMMARGREN), 16 October 1990 (16.10.90), figure 3 | 1 |
|  | Yambaev Kh.K "Spetsialnye pribory dlya inzhenerno-geodezicheskikh rabot", 1990 "Nedra" (Moscow), § 16 Lazernye metody kontrolya pryamolineihosti tekhnologicheskogo oborudo vaniya, pages 90-94 | 1 |

☐ Further documents are listed in the continuation of Box C.　　☐ See patent family annex.

| | |
|---|---|
| *　Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 June 1992 (25.06.92) | 28 July 1992 (28.07.92) |

| Name and mailing address of the ISA/ | Authorized officer |
|---|---|
| ISA/RU | |
| Facsimile No. | Telephone No. |

Form PCT/ISA/210 (second sheet) (July 1992)